# EUROPÄISCHE PATENTANMELDUNG

(11) **EP 2 610 470 A2**
(43) Veröffentlichungstag der Anmeldung: **03.07.2013**
(21) Anmeldenummer: 12007808.4
(22) Anmeldetag: 19.11.2012
(51) Int. Cl.: F02G 5/02, F02G 5/00

(54) **Verfahren zum Betreiben einer stationären Kraftanlage mit wenigstens einer Brennkraftmaschine**

(30) Priorität: 28.12.2011 AT 18972011
(71) Anmelder: GE Jenbacher GmbH & Co OHG, 6200 Jenbach (AT)
(72) Erfinder: Gruber, Friedrich, 6283 Hippach (AT)
(74) Vertreter: Gangl, Markus

(57) **Zusammenfassung**

Verfahren zum Betreiben einer stationären Kraftanlage (1) mit wenigstens einer Brennkraftmaschine (2), vorzugsweise einem Gasmotor, und einer Energieumwandlungsvorrichtung (3), wobei die Energieumwandlungsvorrichtung (3) nach einem organischen Kreisprozess nach Rankine betrieben wird, wobei der Energieumwandlungsvorrichtung (3) zur Verdampfung eines wenigstens zweiphasigen Arbeitsmediums (M) eine Abwärme der wenigstens einen Brennkraftmaschine (2) zugeführt wird, wobei der Energieumwandlungsvorrichtung (3) zur Kondensation des Arbeitsmediums (M), vorzugsweise verflüssigte, Kaltluft (K) einer Flüssigluftspeichervorrichtung (9) zugeführt wird.

## Beschreibung

Die Erfindung betrifft ein Verfahren zum Betreiben einer stationären Kraftanlage mit wenigstens einer Brennkraftmaschine, vorzugsweise einem Gasmotor, und einer Energieumwandlungsvorrichtung, wobei die Energieumwandlungsvorrichtung nach einem organischen Kreisprozess nach Rankine betrieben wird, wobei der Energieumwandlungsvorrichtung zur Verdampfung eines wenigstens zweiphasigen Arbeitsmediums eine Abwärme der wenigstens einen Brennkraftmaschine zugeführt wird. Weiters betrifft die Erfindung eine stationäre Kraftanlage mit wenigstens einer Brennkraftmaschine, vorzugsweise einem Gasmotor, und einer Energieumwandlungsvorrichtung, wobei die Energieumwandlungsvorrichtung nach einem organischen Kreisprozess nach Rankine betreibbar ist, wobei der Energieumwandlungsvorrichtung zur Verdampfung eines wenigstens zweiphasigen Arbeitsmediums eine Abwärme der wenigstens einen Brennkraftmaschine zuführbar ist.

Der Stromverbrauch im öffentlichen Netz ist nicht konstant, sondern weist typische Tagesverläufe auf. So ist der Stromverbrauch in den Nachtstunden üblicherweise relativ gering, wohingegen während des Tages mehrere Verbrauchsspitzen auftreten können. Darüber hinaus gibt es jahreszeitliche Variationen im Stromverbrauch. Die Kraftwerke, die den elektrischen Strom im Netz bereitstellen, müssen diesen Veränderungen Rechnung tragen. Dies geschieht in der Regel dadurch, dass unterschiedliche Kraftwerkstypen und Kraftwerkstechnologlen kombiniert werden.

Dabei wird in eine Erzeugung von Grundlaststrom oder Bandstrom und in eine Erzeugung von Spitzenstrom unterschieden. Als Bandstrom wird jener Anteil an elektrischer Leistung bezeichnet, der auch in Schwachlastzeiten nicht unterschritten wird und daher über den Großteil des Jahres konstant in das Netz eingespeist werden kann. Beispielsweise werden zur Erzeugung von Bandstrom Laufkraftwerke, Kernkraftwerke oder Kohlekraftwerke eingesetzt, die unter der Voraussetzung konstanter Leistungsabgabe und hoher jährlicher Laufzeiten den Strom sehr kostengünstig erzeugen können. Zur Abdeckung der Verbraucher-Maxima hingegen müssen teure Spitzenlast-Kraftwerke eingesetzt werden, beispielsweise Speichersee-Wasserkraftwerke oder Gaskraftwerke. Durch die in letzter Zeit vermehrt errichteten Wind- und Solarkraftwerke, deren Stromproduktion nicht mit der Verbraucher-Charakteristik synchronisiert werden kann, müssen die restlichen Kraftwerke eine erhöhte Variabilität hinsichtlich Zeitpunkt und Ausmaß an Leistungsbereitstellung entfalten.

Insbesondere beim Einsatz einer Stromerzeugungsanlage bzw. stationären Kraftanlage auf Basis einer Motorenanlage umfassend eine oder mehrere Brennkraftmaschinen werden oftmals Abwärmen der Brennkraftmaschinen einfach an die Umgebung abgeführt. Anstatt jedoch die Abwärmen einer Brennkraftmaschine ungenutzt der Umgebung zuzuführen, ist es im Stand der Technik bereits bekannt, diese Abwärmen in einer Energieumwandlungsvorrichtung, die nach einem organischen Kreisprozess nach Rankine (Organic Rankine Cycle, ORC) betrieben wird, zu nutzen. Dabei werden die Abwärmen dem Kreisprozess zugeführt, um ein organisches Arbeitsmedium in einem Verdampfer bzw. einem ersten Wärmetauscher zu verdampfen, indem die Wärmeenergie der Abwärmen auf das Arbeitsmedium übertragen wird. Durch die Verdampfung, die durch die Verwendung eines organischen Arbeitsmediums bereits bei relativ geringen Temperaturen möglich ist, nimmt das spezifische Volumen des Arbeitsmediums zu. Das gespannte Arbeitsmedium wird unter Verrichtung von Arbeit in einer Turbine entspannt und anschließend in einem weiteren, zweiten Wärmetauscher wieder kondensiert. Die Turbine kann dabei mit einem Generator verbunden sein, der die mechanische Energie der Turbine in elektrische Energie umwandelt und in ein Stromnetz einspeist. Dadurch kann eine stationäre Kraftanlage insbesondere in Zeiten von Spitzenlast-Anforderungen eine erhöhte Leistung an ein angeschlossenes Stromnetz abgeben.

Die Differenz der Temperaturniveaus von Verdampfer bzw. erstem Wärmetauscher und zweitem Wärmetauscher wird im Kreisprozess bzw. Dampfprozess energetisch genutzt. Je höher dabei diese Temperaturdifferenz bzw. Temperaturspreizung ist, desto höher ist der Wirkungsgrad des Dampfprozesses.

Aufgabe der Erfindung ist es, einen gegenüber dem Stand der Technik verbesserten Wirkungsgrad für die Energieumwandlungsvorrichtung zu erzielen. Insbesondere soll die Temperaturspreizung zwischen erstem Wärmetauscher und zweitem Wärmetauscher erhöht werden.

Diese Aufgabe wird erfindungsgemäß durch die Merkmale des Patentanspruchs 1 gelöst. Vorteilhafte Ausgestaltungen der Erfindung sind in den davon abhängigen Patentansprüchen angegeben.

Gemäß der Erfindung ist also vorgesehen, dass der Energieumwandlungsvorrichtung zur Kondensation des Arbeitsmediums, vorzugsweise verflüssigte, Kaltluft einer Flüssigluftspeichervorrichtung zugeführt wird.

Die Abwärmen der wenigstens einen Brennkraftmaschine können dabei eine Temperatur von etwa 90 °C aufweisen und die Temperatur der vorzugsweise verflüssigten Kaltluft kann z.B. -160 °C betragen. Durch die relativ große Temperaturdifferenz zwischen den Abwärmen der wenigstens einen Brennkraftmaschine und der Kaltluft kann in der Energieumwandlungsvorrichtung ein entsprechend guter Prozesswirkungsgrad des organischen Kreisprozesses nach Rankine von ca. 15 % bis 20 % erzielt werden, d.h. ca. 15 % bis 20 % der Wärmeenergie der Abwärmen der wenigstens einen Brennkraftmaschine kann in mechanische bzw. elektrische Energie umgewandelt werden.

Gemäß einer bevorzugten Ausführungsform kann vorgesehen sein, dass die Verdampfung des Arbeitsmediums in einem ersten Dampfprozesswärmetauscher erfolgt, wobei dem ersten Dampfprozesswärmetauscher eine Abwärme der wenigstens einen Brennkraftmaschine mittels wenigstens eines Wärmekreislaufs der wenigstens einen Brennkraftmaschine zugeführt wird. Dabei kann dem ersten Dampfprozesswärmetauscher die Abwärme aus einem Motorkühlwasserkreislauf und/oder aus einem Motorölkühlkreislauf und/oder aus einem Ladeluftkühlkreislauf zugeführt werden.

In einer bevorzugten Ausführungsvariante der Erfindung kann vorgesehen sein, dass die Kondensation des Arbeitsmediums in einem zweiten Dampfprozesswärmetauscher erfolgt, wobei dem zweiten Dampfprozesswärmetauscher, vorzugsweise flüssige, Kaltluft zugeführt wird, wobei die Temperatur der Kaltluft vorzugsweise höchstens etwa -120 °C, besonders bevorzugt höchstens etwa -160 °C, beträgt. Es kann auch vorgesehen sein, dass die Kaltluft während des Betriebs der wenigstens einen Brennkraftmaschine zumindest zeitweise, vorzugsweise nur zeitweise, der Energieumwandlungsvorrichtung zugeführt wird. Besonders günstig ist dabei, wenn die Kaltluft bei einer Leistungsanforderung der wenigstens einen Brennkraftmaschine größer einer vorgebbaren Referenzleistung, vorzugsweise der Nennleistung der Brennkraftmaschine, der Energieumwandlungsvorrichtung zugeführt wird.

Schutz wird auch begehrt für eine stationäre Kraftanlage nach Anspruch 9. Vorteilhafte Ausgestaltungen der stationären Kraftanlage sind in den davon abhängigen Patentansprüchen angegeben.

Bei einer gattungsgemäßen stationären Kraftanlage ist erfindungsgemäß also vorgesehen, dass der Energieumwandlungsvorrichtung zur Kondensation des Arbeitsmediums, vorzugsweise verflüssigte, Kaltluft einer Flüssigluftspeichervorrichtung über eine Kaltluftleitung zuführbar ist.

Eine besondere Ausführungsvariante sieht vor, dass die Energieumwandlungsvorrichtung zur Verdampfung des Arbeitsmediums einen ersten Dampfprozesswärmetauscher umfasst, wobei dem ersten Dampfprozesswärmetauscher eine Abwärme der wenigstens einen Brennkraftmaschine mittels wenigstens eines Wärmekreislaufs der wenigstens einen Brennkraftmaschine zuführbar ist. Dabei kann vorgesehen sein, dass dem ersten Dampfprozesswärmetauscher die Abwärme aus einem Motorkühlwasserkreislauf und/oder aus einem Motorölkühlkreislauf und/oder aus einem Ladeluftkühlkreislauf zuführbar ist.

Vorzugsweise kann vorgesehen sein, dass die Energieumwandlungsvorrichtung zur Kondensation des Arbeitsmediums einen zweiten Dampfprozesswärmetauscher umfasst, wobei dem zweiten Dampfprozesswärmetauscher, vorzugsweise flüssige, Kaltluft zuführbar ist, wobei die Kaltluft vorzugsweise eine Temperatur von höchstens etwa -120 °C, besonders bevorzugt höchstens etwa -160 °C, aufweist.

Gemäß einer besonders bevorzugten Ausführungsform kann vorgesehen sein, dass die wenigstens eine Brennkraftmaschine als, vorzugsweise fremdgezündeter, Hubkolbenmotor ausgebildet ist.

Im Folgenden werden weiter vorteilhafte Ausführungsbeispiele einer stationären Kraftanlage und eines Verfahren zum Betreiben einer stationären Kraftanlage angegeben.

In einem vorteilhaften Verfahren zum Betreiben einer stationären Kraftanlage kann eine Entspannungsvorrichtung vorgesehen sein, der zur Erzeugung von mechanischer und/oder elektrischer Energie eine komprimierte Arbeitsluft zugeführt wird, wobei die zugeführte Arbeitsluft die Entspannungsvorrichtung unter Verrichtung von Arbeit, vorzugsweise Expansionsarbeit, durchströmt, wobei die Arbeitsluft nach dem Durchströmen der Entspannungsvorrichtung der wenigstens einen Brennkraftmaschine der stationären Kraftanlage als Verbrennungsluft zugeführt wird.

Als besonders vorteilhaft hat es sich dabei herausgestellt, wenn der Entspannungsvorrichtung als Arbeitsluft eine Kaltluft aus einer Flüssigluftspeichervorrichtung zugeführt wird, wobei die Kaltluft in einem Kaltluftwärmetauscher erwärmt wird, vorzugsweise auf eine Temperatur von etwa 250 °C bis etwa 350 °C, besonders bevorzugt etwa 300 °C. Dabei kann zur Erwärmung der Kaltluft im Kaltluftwärmetauscher eine Abgasabwärme der wenigstens einen Brennkraftmaschine verwendet werden.

Eine weitere Ausführungsvariante sieht vor, dass die Kaltluft vor Ihrer Erwärmung im Kaltluftwärmetauscher mittels eines Ladeluftwärmetauschers zur Kühlung einer Ladeluft der wenigstens einen Brennkraftmaschine verwendet wird.

Gemäß einer besonders bevorzugten Ausführungsform kann vorgesehen sein, dass die Verbrennungsluft in einer Verbrennungsluftkühlvorrichtung gekühlt wird, vorzugsweise auf eine Temperatur von etwa 5 °C bis etwa 20 °C, besonders bevorzugt etwa 10 °C. Dabei kann vorgesehen sein, dass die Verbrennungsluftkühlvorrichtung einen Umgebungsluftwärmetauscher umfasst, in dem die Verbrennungsluft, vorzugsweise unter Verwendung von Umgebungsluft, gekühlt wird, vorzugsweise auf eine Temperatur von etwa 40 °C bis etwa 60 °C, besonders bevorzugt etwa 50 °C. Es kann auch vorgesehen sein, dass die Verbrennungsluftkühlvorrichtung einen Verbrennungsluftwärmetauscher umfasst, in dem die Verbrennungsluft, vorzugsweise unter Verwendung der Kaltluft, gekühlt wird, vorzugsweise auf eine Temperatur von etwa 5 °C bis etwa 20 °C, besonders bevorzugt etwa 10 °C.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigt bzw. zeigen:
- Fig. 1: ein schematisches Blockschaltbild einer vorgeschlagenen stationären Kraftanlage,
- Fig. 2: ein schematisches Blockschaltbild einer ORC-Energieumwandlungsvorrichtung,
- Fig. 3: ein schematisches Blockschaltbild einer Flüssigluftspeichervorrichtung,
- Fig. 4: ein schematisches Blockschaltbild eines rekuperativen Wärmespeichers und
- Fig. 5: ein Leistungsdiagramm einer vorgeschlagenen stationären Kraftanlage.

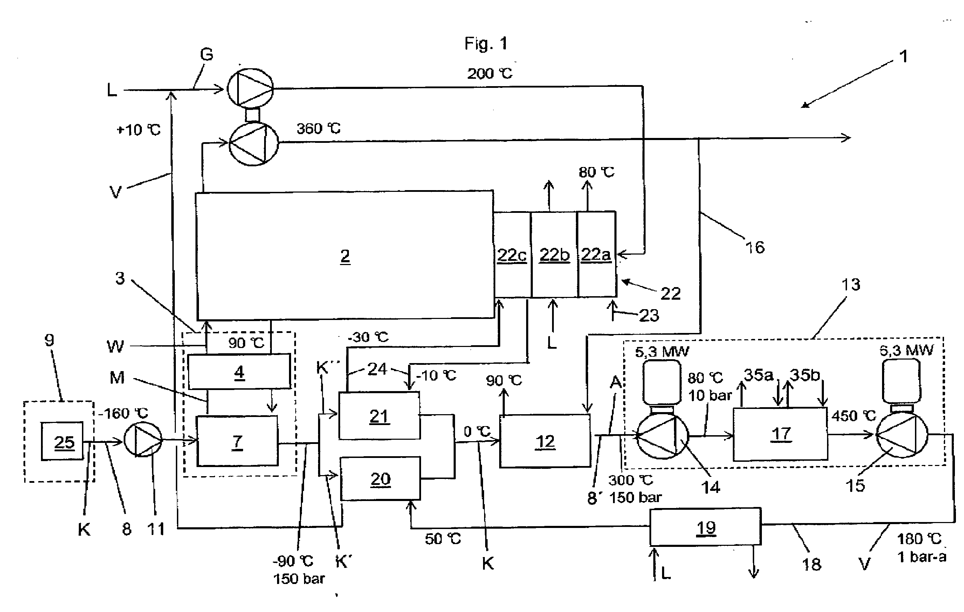

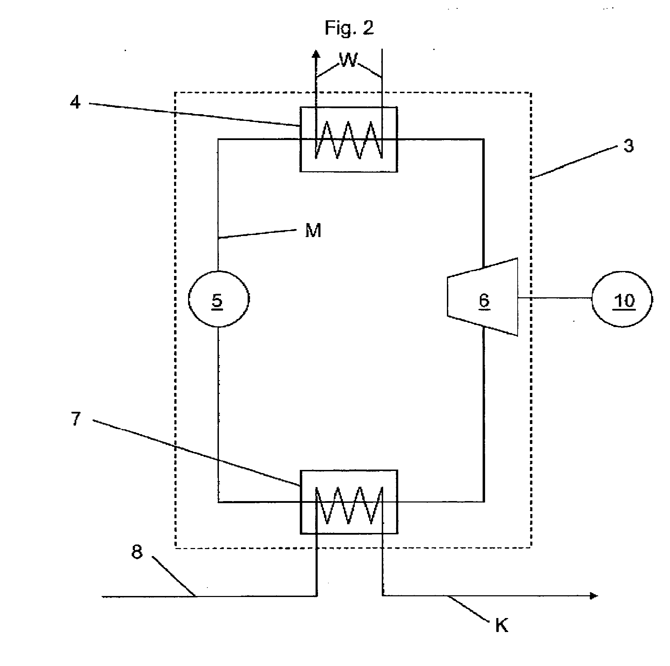

Fig. 1 zeigt ein schematisches Blockschaltbild einer stationären Kraftanlage 1, wobei die stationäre Kraftanlage 1 eine Motorenanlage umfassend wenigstens eine Brennkraftmaschine 2 und eine Cryogen-Speicheranlage bzw. Flüssigluftspeichervorrichtung 9 umfasst, und Fig. 2 zeigt ein detaillierteres Blockschaltbild einer mit der Brennkraftmaschine 2 verbundenen Energieumwandlungsvorrichtung 3, die nach einem organischen Kreisprozess nach Rankine (ORC-Prinzip) betrieben wird.

Die Brennkraftmaschine 2 ist in diesem Beispiel als fremdgezündeter Gas-Otto-Motor ausgebildet und mittels eines Wärmekreislaufs W mit einer Energieumwandlungsvorrichtung 3, insbesondere mit einem als Verdampfer ausgebildeten ersten Dampfprozesswärmetauscher 4 der Energieumwandlungsvorrichtung 3 verbunden. Der Wärmekreislauf W transportiert dabei eine Abwärme der Brennkraftmaschine 2 zum ersten Dampfprozesswärmetauscher 4, indem er beispielsweise an einen Kühlkreislauf der Brennkraftmaschine 2 (z.B. Motorkühlwasserkreislauf und/oder Motorölkühlkreislauf und/oder Ladeluftkühlkreislauf) angeschlossen ist und dessen bzw. deren Kühlmittel durch den ersten Dampfprozesswärmetauscher 4 fördert. In der Energieumwandlungsvorrichtung 3 wird ein Arbeitsmedium M durch den ersten Dampfprozesswärmetauscher 4 gefördert, beispielsweise mittels einer Pumpe 5, und die durch den Wärmekreislauf W in den ersten Dampfprozesswärmetauscher 4 gebrachte Abwärme der Brennkraftmaschine 2 für eine Verdampfung des Arbeitsmediums M genutzt. Das verdampfte Arbeitsmedium M wird unter Verrichtung von Arbeit in einer Turbine 6 entspannt und in einem als Kondensator ausgebildeten zweiten Dampfprozesswärmetauscher 7 wieder kondensiert bzw, verflüssigt (siehe Fig. 2).

Bei Anforderung von Spitzenlast wird dem zweiten Dampfprozesswärmetauscher 7 über eine Kaltluftleitung 8 mittels einer Kaltluftpumpe 11 eine flüssige Kaltluft K aus einem Flüssigluftspeicher 25 einer Flüssigluftspeichervorrichtung 9 zugeführt, deren Kälteenergie zum Abkühlen und Kondensieren des Arbeitsmediums M genutzt wird. Die dem zweiten Dampfprozesswärmetauscher 7 zugeführte, flüssige Kaltluft K weist in diesem Beispiel eine Temperatur von -160 °C auf. Durch den Wärmeaustausch zwischen Arbeitsmedium M und Kaltluft K im zweiten Dampfprozesswärmetauscher 7 erwärmt sich die Kaltluft K. Dadurch kommt es zu einer Verdampfung sowie zu einer ersten Vorwärmung der Kaltluft K von ca. -160 °C auf ca. -90 °C, wobei die Kaltluft K nach der Verdampfung und Vorwärmung einen Druck von etwa 150 bar aufweist. Die für die Verdampfung und Vorwärmung erforderliche Wärme wird über die Energieumwandlungsvorrichtung 3 von der Brennkraftmaschine 2 bereitgestellt, wobei dafür beispielsweise die Summe der Wärme aus Motorkühlwasser, Motoröl und einer Ladeluft-Verdichterstufe genutzt werden kann.

Die Temperatur des Wärmekreislaufs W bzw. des im Wärmekreislauf W transportierten Mediums (z.B. Kühlwasser) beträgt in diesem Beispiel 90 °C. Durch die sehr hohe Temperaturdifferenz zwischen dem Medium des Wärmekreislaufs W im ersten Dampfprozesswärmetauscher 4 (90 °C) und der Kaltluft K im zweiten Dampfprozesswärmetauscher 7 (-160 °C) kann die Energieumwandlungsvorrichtung 3 einen sehr hohen Wirkungsgrad erzielen. Ein an der Turbine 6 angeschlossener Generator 10 kann beispielsweise 15 - 20 % der Abwärmeenergie in elektrische Energie umwandeln und in ein angeschlossenes Stromnetz abgeben.

Die Verdampfung der Kaltluft K durch Nutzung von Motorwärmen ermöglicht den sinnvollen Einsatz eines Dampfprozesses mit einem geeigneten Fluid als Arbeitsmedium M, wobei die Motorwärmen als Wärmequelle für die Fluidverdampfung und die Kälte der Kaltluft K zur Fluidkondensation genutzt werden. Durch die relativ große Temperaturdifferenz der Motorwärmen sowie der Kaltluft K kann ein entsprechend guter Prozesswirkungsgrad von ca. 15 - 20 % erzielt werden, d.h. ca. 15 - 20 % der Motorwärme kann in mechanische bzw. elektrische Energie umgewandelt werden.

Zur weiteren energetischen Nutzung der Kälteenergie der Kaltluft K wird diese nach ihrem Durchströmen durch den zweiten Dampfprozesswärmetauscher 7 der Energieumwandlungsvorrichtung 3 einem Kaltluftwärmetauscher 12 zugeführt, der die Kaltluft K erwärmt und als Arbeitsluft A einer Entspannungsvorrichtung 13 zuführt. Im gezeigten Beispiel wird in der Entspannungsvorrichtung 13 die durch den Kaltluftwärmetauscher 12 stark erwärmte und damit unter hohem Druck anliegende Arbeitsluft A in zwei Expansionsturbinen 14, 15 unter Verrichtung von Arbeit entspannt. Die Expansionsturbinen 14, 15 sind dabei mit elektrischen Generatoren verbunden, die elektrische Energie in ein angeschlossenes Stromnetz abgeben können.

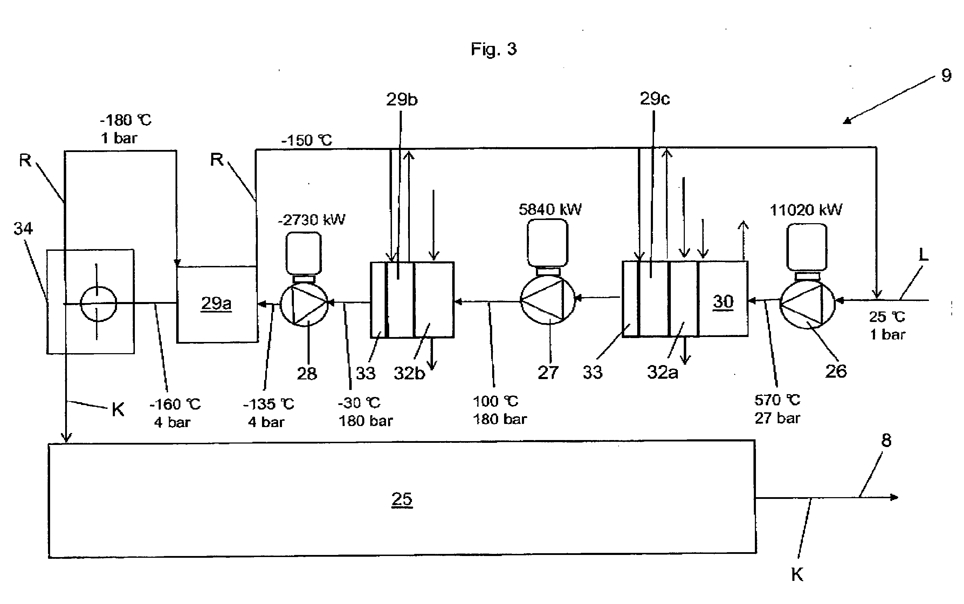

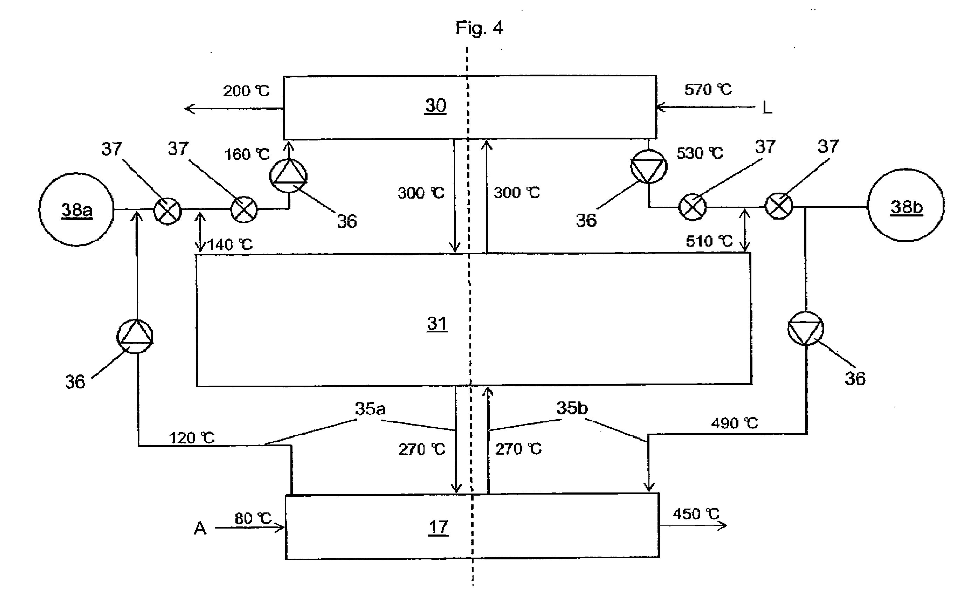

Im Kaltluftwärmetauscher 12 wird in diesem Beispiel die Kaltluft K unter Nutzung einer Abgaswärme der Brennkraftmaschine 2 oder einer Mehrzahl von Brennkraftmaschinen 2 erwärmt, indem dem Kaltluftwärmetauscher 12 heißes Abgas über eine Abgasleitung 16 zugeführt wird. Das Abgas weist eine Temperatur von etwa 360 °C auf und ermöglicht eine Erwärmung der Kaltluft K auf eine Temperatur von etwa 300 °C, wobei im Gegenzug das Abgas auf etwa 120 °C bis 100 °C abgekühlt wird. Im Anschluss an diese Erwärmung liegt die Kaltluft K mit einer Temperatur von etwa 300 °C bei einem Druck von etwa 150 bar als Arbeitsluft A an der ersten Expansionsturbine 14 der Entspannungsvorrichtung 13 an. Nach Verrichtung von Arbeit in der ersten Expansionsturbine 14 weist die Arbeitsluft A eine Temperatur von 80 °C bei einem Druck von etwa 10 bar auf. Vor Eintritt in die zweite Expansionsturbine 15 wird die Arbeitsluft A in einem Arbeitsluftwärmetauscher 17 neuerlich erwärmt. Die im Arbeitsluftwärmetauscher 17 der Arbeitsluft A zugeführte Wärme kann dabei unter anderem aus der Luftverdichtung der Flüssigluftspeichervorrichtung 9 stammen, indem die Wärme der verdichteten Luft L in einem rekuperativen Wärmespeicher 31 gespeichert und bei Bedarf dem Arbeitsluftwärmetauscher 17 zugeführt wird (siehe Fig. 3 und Fig. 4). Durch diese Zwischenerwärmung wird die Temperatur der Arbeitsluft A auf etwa 450 °C angehoben. Nach Verrichtung von Arbeit in der zweiten Expansionsturbine 15 weist die Arbeitsluft A eine Temperatur von 180 °C bei einem Druck von 1 bar auf.

Das grundsätzliche Verfahrenskonzept einer zweistufigen Entspannung mit Zwischenerhitzung zur Erhöhung der Leistungsausbeute bei Arbeitsturbinen ist bereits bekannt. Im vorliegenden Fall wird jedoch eine spezielle Velahrensführung vorgeschlagen, bei der die Arbeitsluft A vor der ersten Expansionsturbine 14 über das Motorabgas aufgeheizt wird. Die Abstimmung der Leistungen von Motorenanlage und Cryogen-Speicheranlage ist in der Weise vorgenommen, dass die Abgaswärme der Brennkraftmaschine 2 (bzw. der Mehrzahl von Brennkraftmaschinen 2) genau der Wärmemenge entspricht, die zur Erhitzung der Kaltluft K vor der ersten Expansionsturbine 14 auf die erwünschte Temperatur erforderlich ist. Nach der Erhitzung im Kaltluftwärmetauscher 12 liegt die Kaltluft K als Arbeitsluft A an der ersten Expansionsturbine 14 an. Die Summe der Abwärmen aus Kühlwasser, Motoröl und Hochtemperatur-Intercooler (erste Kühlstufe 22a einer Ladeluftkühlvorrichtung 22) und die Abgaswärme liefern bei hochaufgeladenen Gas- oder Dieselmotoren ziemlich genau jene Wärmeenergien, die im vorgeschlagenen Anlagenkonzept benötigt werden, um gleichzeitig zur Verdampfung und ersten Vorwärmung der Kaltluft K über den zweiten Dampfprozesswärmetauscher 7 (Kondensationswärmetauscher) der Energieumwandlungsvorrichtung 3 (ORC-Dampfprozess) auch eine Erhitzung der Kaltluft K vor der ersten Expansionsturbine 14 zu gewährleisten.

Der Volumenstrom der Arbeitsluft A ist aufgrund des sehr hohen Druckes von etwa 150 bar vor der ersten Expansionsturbine 14 relativ gering, sodass der erforderliche Kaltluftwärmetauscher 12 klein und kompakt gehalten werden kann. Beispielsweise kann die Kaltluft K wie eine Flüssigkeit ein Rohrbündelsystem des Kaltluftwärmetauscher 12 durchströmen, während das Motorabgas über entsprechende Kühllamellen geführt wird.

Die erneute Erhitzung der Arbeitsluft A nach der ersten Expansionsturbine 14 und vor der zweiten Expansionsturbine 15 erfolgt über einen Arbeitsluftwärmetauscher 17, der beispielsweise mit einem rekuperativen Wärmespeicher 31, auf den die Kompressionswärme während der Luftverflüssigungsphase geladen wurde, im Wärmeaustausch steht. Dabei kann vorgesehen sein, dass im Arbeitsluftwärmetauscher 17 die Wärme über Zwischenkreisläufe (z.B. erster Wärmespeicherkreislauf 35a und zweiter Wärmespeicherkreislauf 35b) übertragen wird, wobei aufgrund der Spannweite des Temperaturbereiches der zu übertragenden Wärme von 50 °C bis 450 °C zwei Wärmeträgermedien eingesetzt werden können. Für den Temperaturbereich zwischen 50 °C und ca. 250 °C kann dabei ein Thermoöl und für den Temperaturbereich zwischen 250 °C und 450 °C kann eine Salzschmelze zur Anwendung kommen. Eine beispielhafte Ausgestaltung eines Arbeitsluftwärmetauschers 17 mit rekuperativem Wärmespeicher 31 ist in Fig. 4 gezeigt.

Die Arbeitsluft A am Ausgang der Entspannungsvorrichtung 13 wird über eine Verbrennungsluftleitung 18 der Brennkraftmaschine 2 als Verbrennungsluft V zugeführt. Da die Arbeitsluft A am Ausgang der Entspannungsvorrichtung 13 eine Temperatur von etwa 180 °C aufweist, erfolgt im gezeigten Beispiel eine zweistufige Abkühlung der Verbrennungsluft V. Zunächst wird die Verbrennungsluft V in einem Umgebungsluftwärmetauscher 19 unter Zuhilfenahme von Umgebungsluft L auf eine Temperatur von etwa 50 °C abgekühlt. Der Luftmassenstrom der zu kühlenden Verbrennungsluft V beträgt dabei etwa 20 kg/s. Nach der ersten Abkühlung im Umgebungsluftwärmetauscher 19 wird die Verbrennungsluft V zusätzlich über einen Verbrennungsluftwärmetauscher 20 geführt.

Im Verbrennungsluftwärmetauscher 20 kommt als Kühlmedium die Kaltluft K zum Einsatz, indem die Kaltluft K in der Kaltluftleitung 8 in zwei Teilströme aufgeteilt und ein erster Kaltluftteilstrom K' durch den Verbrennungsluftwärmetauscher 20 und ein zweiter Kaltluftteilstrom K" durch einen Ladeluftwärmetauscher 21 geführt wird. Nach dem Durchströmen der Kaltluftteilströme K', K" durch Verbrennungsluftwärmetauscher 20 bzw. Ladeluftwärmetauscher 21 werden diese wieder zusammengeführt und als Kaltluft K dem Kaltluftwärmetauscher 12 zugeführt, in dem wie bereits beschrieben die Kaltluft K ausgehend von beispielsweise 0 °C auf eine Temperatur von etwa 300 °C erwärmt und anschließend als Arbeitsluft A der Entspannungsvorrichtung 13 zugeführt wird.

Im Verbrennungsluftwärmetauscher 20 wird die Verbrennungsluft V auf eine Temperatur von etwa 0 °C bis 10 °C abgekühlt und in weiterer Folge der Brennkraftmaschine 2, beispielsweise unter Beimengung von Umgebungsluft L und/oder Brennstoff, als Ladeluft G zugeführt. Als Ladeluft G wird im Rahmen der Erfindung somit sowohl Luft als auch ein Brennstoff-Luft-Gemisch, beispielsweise ein Brenngas-Luft-Gemisch für einen stationären Gasmotor, verstanden. Die Ladeluft G wird im gezeigten Beispiel in bekannter Art und Weise verdichtet (z.B. mittels ein- oder mehrstufigem Turbolader), wodurch sie bei Motorvolllast eine Temperatur von etwa 150 °C bis 200 °C aufweist. Zur Verbesserung der Verbrennungseigenschaften bzw. Erhöhung der Leistungsausbeute der Brennkraftmaschine 2 wird die Ladeluft G anschließend in einer Ladeluftkühlvorrichtung 22 abgekühlt.

Um die Verbrennungstemperatur, die einen maßgeblicher Faktor für die thermische Belastung der Brennkraftmaschine 2 sowie für die NOx-Entstehung während der Verbrennung darstellt, zu senken, wird die Ladeluft G im sog. Intercooler (Ladeluftkühlvorrichtung 22) auf möglichst niedrige Werte rückgekühlt. Je nach Kühlmedium (z.B. Umgebungsluft oder Motorkühlwasser) erreicht man eine Rückkühlung auf Werte zwischen 40 und 90 °C.

Insbesondere bei Gasmotoranlagen mit Kraft-Wärmekopplung führt man die Intercooler häufig zweistufig aus, wobei in der ersten Kühlstufe 22a die Verbrennungsluft beispielsweise durch das Motorkühlwasser oder über einen Heizkreislauf (z.B. für ein Fernwärmeheizsystem) auf etwa 90 °C und in der zweiten Kühlstufe 22b über einen Umgebungsluft-Wärmetauscher weiter auf etwa 50 °C abgekühlt wird. Dadurch kann ein Teil der Wärme aus der verdichteten Ladeluft G für Heizzwecke genutzt werden.

Bei modernen Hochleistungsgasmotoren ist es zur Leistungssteigerung und zur Steigerung der Klopffestigkeit der Verbrennung umso günstiger, je weiter die Ladeluft G vor Eintritt in den Brennraum abgekühlt wird. Dem steht entgegen, dass ein Kühlmedium mit dafür geeignetem Temperaturniveau üblicherweise nicht verfügbar ist bzw. energetisch aufwändig und kostenintensiv bereitgestellt werden müsste. Darüber hinaus kann die Wasser-Kondensatbildung in der Niedertemperaturstufe des Intercoolers zu Problemen führen. Das Kältereservoir der Kaltluft K während des Speicher-Entladungsbetriebes der Flüssigluftspeichervorrichtung 9 kann nun dazu genutzt werden, die Temperatur der Ladeluft G und somit der Zylinderladung auch bei hoher Umgebungstemperatur auf Werte von etwa 5 °C bis 10 °C abzukühlen. Dadurch kann eine Leistungssteigerung einer Brennkraftmaschine bzw. einer mehrere Brennkraftmaschinen umfassenden Motorenanlage um bis zu 30 % erzielt werden. Eine grundsätzlich mögliche noch weitere Abkühlung der Ladeluft G ist nicht anzustreben, um Vereisungsprobleme zu vermeiden.

Die Kühlung der Ladeluft G erfolgt in der in Fig. 1 gezeigten stationären Kraftanlage 1 dreistufig. Die erste Kühlstufe 22a der Ladeluftkühlvorrichtung 22 ist Teil eines ersten Ladeluftkühlkreislaufs 23, in dem ein flüssiges Kühlmedium wie beispielsweise Wasser zirkuliert. Die zweite Kühlstufe 22b der Ladeluftkühlvorrichtung 22 kühlt die Ladeluft G unter Verwendung von Umgebungsluft L weiter ab. Die dritte Kühlstufe 22c der Ladeluftkühlvorrichtung 22 nutzt die Kaltluft K", die durch den Ladeluftwärmetauscher 21 strömt, zur weiteren Abkühlung der Ladeluft G, beispielsweise auf eine Temperatur von etwa 5 °C. Dabei sind die dritte Kühlstufe 22c der Ladeluftkühlvorrichtung 22 und der Ladeluftwärmetauscher 21 Teil eines zweiten Ladeluftkühlkreislaufs 24, in dem ein flüssiges Kühlmedium zirkuliert. Im Ladeluftwärmetauscher 21 wird das Kühlmedium unter Einwirkung der Kälteenergie der Kaltluft K" auf etwa -30 °C abgekühlt und mit dieser Temperatur der dritten Kühlstufe 22c der Ladeluftkühlvorrichtung 22 zugeführt. In der dritten Kühlstufe 22c erfolgt eine Abkühlung der Ladeluft G und damit gleichzeitig eine Erwärmung des Kühlmediums des zweiten Ladeluftkühlkreislaufs 24 auf eine Temperatur von etwa -10 °C, mit der das Kühlmedium dann wieder dem Ladeluftwärmetauscher 21 zugeführt wird.

Eine Kondensatbildung der Ladeluft G kann dadurch vermieden werden, dass der Ladeluft G die extrem trockene Kaltluft K nach verrichteter Arbeit in der Entspannungsvorrichtung 13 als Verbrennungsluft V dem Motor zugeführt wird. Dadurch, dass während der Luftverflüssigung der Kaltluft K in der Flüssigluftspeichervorrichtung 9 in der Luft enthaltene Luftfeuchtigkeit ausgeschieden wird, ist die Kaltluft K generell sehr trocken. Durch diese Trockenheit erfolgt trotz verstärkter Abkühlung der Ladeluft G keine Kondensatbildung.

Im vorgeschlagenen Anlagenkonzept einer stationären Kraftanlage 1 ist deshalb vorgesehen, die Arbeitsluft A nach Expansion auf Umgebungsdruck über eine Verbrennungsluftkühlvorrichtung (z.B. Umgebungsluftwärmetauscher 19 und Verbrennungsluftwärmetauscher 20) auf etwa 10 °C abzukühlen und als Verbrennungsluft V zum Luftansaugsystem der Brennkraftmaschine 2 zu leiten. Damit lässt sich nicht nur eine Kondensatabscheidung im Intercooler vermeiden, sondern es ist auch möglich, die Ansaugtemperatur vor dem Verdichter des Abgasturboladers für die Phase des Spitzenlastbetriebes selbst bei hohen Umgebungstemperaturen sehr gering zu halten, was den Arbeitsaufwand für den Abgasturbolader verringert und die Leistungsreserven der Brennkraftmaschine 2 entsprechend erhöht. Durch Abkühlung der Ladeluft G vor Eintritt in den Verdichter des Abgasturboladers (durch Zumischung gekühlter Verbrennungsluft V) sowie im Intercooler auf eine Temperatur von 5 °C bis 10 °C kann die Leistung der Brennkraftmaschine 2 bzw. einer Motoranlage umfassend mehrere Brennkraftmaschinen 2 um bis zu 30 % gesteigert werden.

Fig. 3 zeigt ein schematisches Blockschaltbild einer Flüssigluftspeichervorrichtung 9. Ein vorteilhafter Zweck einer Flüssigluftspeichervorrichtung 9 bzw. einer Cryogen-Speicheranlage besteht darin, die in Phasen geringen Stromkonsums üblicherweise niedrigen Stromtarife zur Füllung eines Energiespeichers (in diesem Fall flüssige Luft) zu nutzen und in Phasen maximalen Stromkonsums einen möglichst hohen Anteil der gespeicherten Energie in Form von elektrischem Strom wieder an das öffentliche Netz abzugeben und auf diese Weise zum Ausgleich der Leistungsschwankungen beizutragen.

Dazu wird Umgebungsluft L entsprechend abgekühlt und in einem Flüssigluftspeicher 25, beispielsweise einem Tank, zwischengelagert. Im Bedarfsfall wird die verflüssigte Kaltluft K erwärmt und als Arbeitsluft A einer Entspannungsvorrichtung 13 zugeführt, in der die in der Arbeitsluft A vorhandene Energie zum Teil in mechanische Arbeit umgesetzt wird, beispielsweise in Expansionsturbinen 14, 15. Durch eine Kopplung von Generatoren mit den Expansionsturbinen 14, 15 kann somit bedarfsgerecht und rasch Spitzenstrom erzeugt werden.

Im gezeigten Blockschaltbild wird Luft L (z.B. Umgebungsluft) bei einem Luftmassenstrom von etwa 20 kg/s über eine zweistufige Kompression mittels eines ersten Luftverdichters 26 und eines zweiten Luftverdichters 27 auf einen Druck von ca. 180 - 200 bar verdichtet, wobei nach jeder Kompressor-Stufe eine Rückkühlung der Luft L vorgesehen ist. Anschließend wird die Luft in einer Entspannungsturbine 28 auf etwa 4 bar sowie nach Durchströmen eines ersten Gegenstromwärmetauschers 29a in einer als Drossel ausgeführten Verflüssigungsendstufe 34 wieder auf Umgebungsdruck entspannt. Die Lufttemperatur sinkt dabei unter den Taupunkt und dabei fällt die Luft L zum Teil in flüssiger Form aus. Die flüssige Phase der Luft L wird als flüssige Kaltluft K in den Flüssigluftspeicher 25 geleitet und die gasförmige Phase der Luft L wird als Rückkühlluft R in entsprechenden Gegenstromwärmetauschern 29a, 29b, 29c zur Rückkühlung der Luft L im Verflüssigungsprozess verwendet und/oder der Luft L vor dem Verflüssigungsprozess zugeführt.

Der hier gezeigte Lösungsvorschlag sieht insbesondere eine zweistufige Kompression vor, wobei in der ersten Stufe über einen ersten Luftverdichter 26 in Form eines Turbokompressors eine Verdichtung der Luft L auf ca. 27 bar erfolgt. Die Temperatur der Luft L nach Austritt aus diesem Kompressor beträgt ca. 570 °C. In einem Wärmespeicherwärmetauscher 30 wird die Luft L auf ca. 200 °C rückgekühlt, wobei die Wärme über zwei Wärmespeicherkreisläufe 35a, 35b zu einem rekuperativen Wärmespeicher 31 übergeführt wird (siehe Fig. 4). Über einen ersten Luftwärmetauscher 32a wird die Luft L anschließend auf etwa 50 °C abgekühlt und nach einer weiteren Abkühlung unter Nutzung der Rückkühlluft R in einem dritten Gegenstromwärmetauscher 29c über einen adsorptiven Filter 33 (z.B. regenerativer Aktivkohlefilter) zu einem zweiten Luftverdichter 27 geleitet.

Durch die Kühlung der Luft L im Luftwärmetauscher 32a erfolgt ein Auskondensieren von Wasser. Dieses kann ausgeschieden werden, wodurch die Luft L und in weiterer Folge die Kaltluft K eine sehr hohe Trockenheit aufweist.

Im zweiten Luftverdichter 27, der beispielsweise als Schrauben- oder Kolbenverdichter ausgeführt sein kann, wird die Luft L von 27 bar auf ca. 180 bar komprimiert, wobei die Kompressionswärme in die Umgebung abgeführt wird. Über einen zweiten Luftwärmetauscher 32b und einen zweiten Gegenstromwärmetauscher 29b, der von der Rückkühlluft R aus der Verflüssigungsendstufe 34 durchströmt wird, erfolgt eine weitere Abkühlung auf etwa -30 °C sowie eine weitere Reinigung in einem adsorptiven Filter 33.

Der zweite Luftverdichter 27 kann grundsätzlich ebenfalls als Turbokompressor ausgebildet sein. Aufgrund des bei dem bereits sehr hohen Druckniveau relativ geringen Volumenstromes werden hier jedoch bevorzugt Schrauben-Kompressoren mit innerer Ölkühlung eingesetzt, die zu entsprechend reduzierten Kompressionstemperaturen führen.

Der Sinn der Zweistufigkeit der Verdichtung mit Zwischenkühlung besteht darin, dass sich dadurch zum einen der gesamte Arbeitsaufwand für die Luftverdichtung stark reduzieren lässt (Reduktion um ca. 40 %), und sich zum anderen dadurch unterschiedliche Kompressor-Technologien in idealer Weise verbinden lassen. Der spezielle Lösungsvorschlag sieht vor, die Abstimmung der Kompressorstufen so vorzunehmen, dass die Luft L im ersten Luftverdichter 26 auf einen Druck von etwa 27 bar komprimiert wird und im zweiten Luftverdichter 27 die restliche Kompression auf etwa 180 - 200 bar erfolgt. Entsprechend der unterschiedlichen Kompressionsverhältnisse entfallen damit ca. zwei Drittel der gesamten Kompressionsarbeit auf den ersten Luftverdichter 26. Die Begründung für diese Asymmetrie in der Leistungsaufteilung besteht darin, dass dadurch eine ausreichend hohe Temperatur für die auf einen rekuperativen Wärmespeicher 31 übertragene Wärme und in weiterer Folge für die in einem daran angeschlossenen Arbeitsluftwärmetauscher 17 erhitze Arbeitsluft A erreicht wird. Aus energetischen Gründen und aus Kostengründen ist es sinnvoll, die Wärme bei möglichst hoher Temperatur in den rekuperativen Wärmespeicher 31 zu bringen und die Kaltluft K vor Expansion auf möglichst hohe Temperatur zu erhitzen. Durch die beschriebene Asymmetrie ist dies erreichbar, wobei der sehr hohe thermodynamische Wirkungsgrad des ersten Luftverdichters 26 eine maximale Effizienz gewährleistet.

In Fig. 4 sind schematisch ein rekuperativer Wärmespeicher 31 und damit verschaltete Wärmetauscher (Wärmespeicherwärmetauscher 30 und Arbeitsluftwärmetauscher 17) sowie die entsprechenden Wärmeflüsse dargestellt. Die Wärmetauscher 17, 30 und der rekuperative Wärmespeicher 31 sind dabei zweiteilig ausgeführt, sodass jeweils ein für den jeweiligen Temperaturbereich optimal geeignetes Wärmetauschermedium eingesetzt werden kann. In einem ersten Temperaturbereich zwischen 80 °C und ca. 300 °C wird in einem ersten Wärmespeicherkreislauf 35a vorzugsweise ein Thermoöl (zwischengelagert in einem ersten Reservoir 38a) und in einem zweiten Temperaturbereich zwischen ca. 270 °C und 460 °C wird in einem zweiten Wärmespeicherkreislauf 35b vorzugsweise eine Salzschmelze (zwischengelagert in einem zweiten Reservoir 38b) eingesetzt.

Die Verrohrung bzw. Verschaltung der Wärmespeicherkreisläufe 35a, 35b erfolgt in einer Art und Weise, dass für beide Wärmetauschermedien (in diesem Fall Thermoöl und Salzschmelze) jeweils nur ein Kreislauf-System mit je zwei Pumpen 36 und zwei Absperrvorrichtungen 37 nötig ist, wobei je nach Betriebsmodus der Durchfluss des jeweiligen Wärmetauschermediums durch Wärmespeicherwärmetauscher 30 und/oder Arbeitsluftwärmetauscher 17 gesteuert werden kann. Das Gesamtsystem kann damit sehr einfach gehalten werden.

Im Folgenden soll eine Beispielrechnung zur Leistungsaufnahme und Leistungsabgabe einer vorgeschlagenen stationären Kraftanlage 1 weitere Vorteile der Erfindung darlegen.

Die unter Zuhilfenahme der Fig. 1 bis 4 beschriebenen Prozessverläufe mit den angegebenen Temperaturen und Drücken gelten im Wesentlichen unabhängig vom Massendurchsatz, der die Leistung einer stationären Kraftanlage bestimmt. Zur quantitativen Beschreibung des Lösungsvorschlages wird im Folgenden beispielhaft sowohl für die Luftverflüssigungsphase als auch für die Energieerzeugung ein Luftmassenstrom von 20 kg/s in eine Beispielrechnung eingesetzt.

Für die Phase der Lultverflüssigung sind folgende Randbedingungen angenommen (vgl. Fig. 3):
- Eingangstemperatur der Luft L in den ersten Luftverdichter 26: 25 °C
- Eingangsdruck in den ersten Luftverdichter 26: 1 bar
- Druck nach erstem Luftverdichter 26: 27 bar
- Wirkungsgrad des ersten Luftverdichters 26 (Turboverdichter): 0,85
- Eingangstemperatur in den zweiten Luftverdichter 27: 20 °C
- Eingangsdruck in den zweiten Luftverdichter 27: 27 bar
- Druck nach dem zweiten Luftverdichter 27: 180 bar
- Wirkungsgrad des zweiten Luftverdichters 27 (ölgekühlter Schraubenverdichter): 0,8
- Eingangstemperatur in die Entspannungsturbine 28: -30 °C
- Eingangsdruck in die Entspannungsturbine 28: 180 bar
- Druck nach der Entspannungsturbine 28: 4 bar
- Wirkungsgrad der Entspannungsturbine 28: 0,78

Für die Phase der Luftverflüssigung ergeben sich unter diesen angenommenen Randbedingungen folgende Werte:
- Temperatur am Austritt des ersten Luftverdichters 26: 570 °C
- Leistungsaufnahme des ersten Luftverdichters 26: 11,02 MW
- Temperatur am Austritt des zweiten Luftverdichters 27: ca. 100 °C
- Leistungsaufnahme des zweiten Luftverdichters 27: 5,84 MW
- Temperatur am Austritt der Entspannungsturbine 28: -135 °C
- Leistungsabgabe der Entspannungsturbine 28: 2,73 MW

In der Summe beträgt in dieser Beispielrechnung der Netto-Leistungsaufwand für die Luftverflüssigung 11,02 + 5,84 - 2,73 = 14,13 MW.

Für die Phase der energetischen Speichernutzung der Flüssigluftspeichervorrichtung 9 sind folgende Randbedingungen angenommen (vgl. Fig. 1):
- Leistung der Brennkraftmaschine 2: 13,00 MW
- Verdampfung und Erwärmung der Kaltluft K von -160 °C auf -90 °C mittels Dampfprozess in der Energieumwandlungsvorrichtung 3 Effektiver Wirkungsgrad des Dampfprozesses: 0,18
- Erhitzung der Kaltluft K vor erster Expansionsturbine 14 auf 300 °C und Entspannung in der ersten Expansionsturbine 14 von 150 bar auf 10 bar Wirkungsgrad der ersten Expansionsturbine 14: 0,82
- Erhitzung der Kaltluft K vor zweiter Expansionsturbine 15 auf 450 °C und Entspannung in der zweiten Expansionsturbine 15 von 10 bar auf 1 bar Wirkungsgrad der zweiten Expansionsturbine 15: 0,87

Für die Phase der energetischen Speichernutzung ergeben sich unter diesen angenommenen Randbedingungen folgende Werte:
- Leistungsabgabe des Dampfprozesses: 1,20 MW
- Temperatur nach Austritt aus der ersten Expansionsturbine 14: 80 °C Leistungsabgabe der ersten Expansionsturbine 14: 5,30 MW
- Temperatur nach Austritt aus der zweiten Expansionsturbine 15: 180 °C Leistungsabgabe der zweiten Expansionsturbine 15: 6,30 MW

Für die Berechnung des Leistungs-Rückgewinnungs-Wirkungsgrads (Strornoutput-Stromoutput) der vorgeschlagenen Kraftanlage werden nun drei Fälle unterschieden:
a) Summe der abgegebenen Leistung in der Speichernutzungsphase: 1,20 + 5,30 + 6,30 = 12,80 MW
b) Summe der abgegebenen Leistung in der Speichemutzungsphase ohne Dampfprozess: 11,60 MW
c) Summe der abgegebenen Leistung in der Speichernutzungsphase ohne Dampfprozess und ohne Zuführung der Motorabgaswärme: ca. 8,50 MW

Unter Berücksichtigung der in der Luftverflüssigungsphase aufgewendeten Netto-Leistung von 14,13 MW ergeben sich für die drei Fälle a), b) und c) damit folgende Leistungs-Rückgewinnungs-Wirkungsgrade (Stromoutput-Stromoutput):
a) 0,91 bzw. 91 %
b) 0,82 bzw. 82 %
c) 0,60 bzw. 60 %

Diese Beispielrechnung zeigt deutlich den Vorteil, der sich aus der vorgeschlagenen Verschaltung der Flüssigluflspeichervorrichtung 9 (Cryogen-Speicheranlage) mit der Brennkraftmaschine 2 inkl. damit verbundenem Stromgenerator (Motorenanlage) für den Leistungs-Rückgewinnungs-Wirkungsgrad ergibt.

Die kombinierte Kraftwerksanlage (Motorenanlage und Cryogen-Speicheranlage) kann in diesem Rechenbeispiel in Summe eine Spitzenleistung von etwa 26 MW in das Stromnetz einspeisen, gegenüber 10 MW im Nennlastbetrieb der Motorenanlage. Für die Dauer einiger Stunden kann damit durch eine Kombination von Motorenanlage und Cryogen-Speicheranlage die Kraftwerksleistung um das ca. 2,6-fache gesteigert werden. Umgekehrt kann kurzfristig eine Leistung von etwa 16 MW aus dem Netz herausgenommen werden, um die Energiespeicher (flüssige Kaltluft K im Flüssigluftspeicher 25 und Wärme im rekuperativen Wärmespeicher 31) zu füllen.

Die Laständerungen können in relativ kurzer Zeit vorgenommen werden. Die Zeitdauer von der Anforderung der Spitzenlast bzw. dem Zeitpunkt, zu dem ein Startbefehl für den Kraftwerksbetrieb der Cryogen-Speicheranlage erfolgt, bis zur Erreichung der Spitzenlast beträgt nur etwa 10 bis 15 min. Dies ist eine deutlich kürzere Zeitspanne als beispielsweise moderne Gas-und-Dampf-Kombikraftwerke benötigen, um von Stillstand auf Volllast zu kommen. Bei solchen Kraftwerken beträgt diese Zeitspanne in der Regel mehrere Stunden.

Im Folgenden soll ein Beispieldiagramm zur Leistungsaufnahme und Leistungsabgabe einer vorgeschlagenen stationären Kraftanlage 1 weitere Vorteile der Erfindung darlegen.

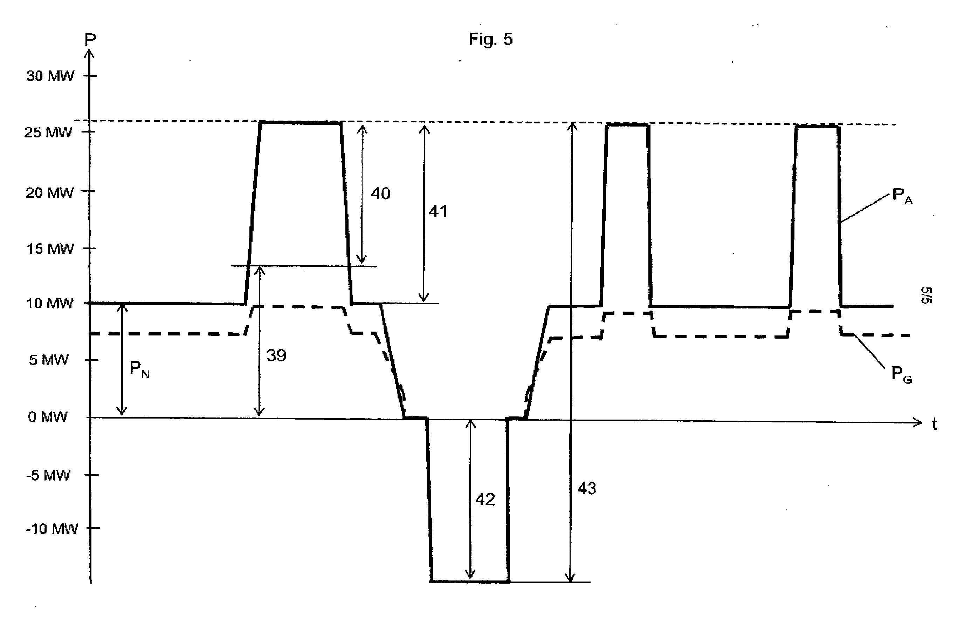

In Fig. 5 ist ein Beispiel einer Betriebsführung einer stationären Kraftanlage 1 nach dem vorgeschlagenen Konzept dargestellt, wobei die stationäre Kraftanlage 1 eine Motorenanlage umfassend wenigstens eine Brennkraftmaschine 2 und eine Cryogen-Speicheranlage bzw. Flüssigluftspeichervorrichtung 9 umfasst.

Der durchgezogene Linienverfauf P_{A} zeigt beispielhaft den Verlauf der Leistungsabgabe bzw. Leistungsaufnahme der stationären Kraftanlage 1 über die Zeit t und der strichlierte Linienverlauf P_{G} soll die der Motorenanlage zugeführte Brennstoffleistung über die Zeit t andeuten.

Die Nennlast P_{N} der Motorenanlage, welche wenigstens eine Brennkraftmaschine 2 umfasst, wird mit 10 MW angenommen. Bei Anforderung der Spitzenlast steigt die Leistungsabgabe der stationären Kraftanlage 1 in einer steilen Rampe auf ca. 26 MW und bleibt auf diesem Niveau bis die Anforderung wieder herausgenommen wird und die Leistungsabgabe innerhalb von 1 bis 2 min wieder auf das Nennlastniveau P_{N} zurückgeht.

Die maximale Leistungsabgabe von ca. 26 MW wird zum einen durch eine Erhöhung der Leistungsabgabe der Motorenanlage auf ca. 13 MW (dargestellt durch Pfeil 39) und zum anderen durch Ausschöpfung der Leistungsabgabe der Entspannungsvorrichtung 13 von ebenfalls ca. 13 MW (dargestellt durch Pfeil 40) erreicht. Insgesamt ergibt sich damit ein durch den Pfeil 41 dargestelltes Spitzenlast-Zuschaltpotenzial von ca. 16 MW gegenüber Nennlastbetrieb der Motorenanlage.

Wenn der Stromverbrauch im Netz absinkt, kann die Motorenanlage in der Leistung reduziert oder abgestellt werden. Bei Stromüberschuss im Netz wird die Cryogen-Speicheranlage bzw. die Flüssigluftspeichervorrichtung 9 auf Speicherfüllbetrieb gestellt und nimmt ca. 15 MW aus dem Netz auf (dargestellt durch Pfeil 42).

Der Pfeil 43 stellt die gesamte Lastvariabilität einer vorgeschlagenen stationären Kraftanlage 1 umfassend eine Motorenanlage und eine Cryogen-Speicheranlage dar. Würde die stationäre Kraftanlage 1 hingegen lediglich eine Motorenanlage und keine Cryogen-Speicheranlage umfassen, entspräche die Lastvariabilität nur der Nennlast P_{N} der Motorenanlage, da in diesem Fall weder eine Zusatzlast durch eine Entspannungsvorrichtung 13 ausgeschöpft werden könnte noch eine Erhöhung der Leistungsabgabe der Motorenanlage durch effizientere Kühlmechanismen erzielt werden könnte.

Die Laständerungen bzw. Änderungen in der Leistungsabgabe der stationären Kraftanlage 1 können grundsätzlich auch in stetiger Form realisiert und z.B. an die Verbrauchercharakteristik angepasst werden.

Das vorgeschlagene Anlagenkonzept ermöglicht eine maximale Variabilität der Leistungsabgabe einer stationären Kraftanlage auf Basis einer integrativen Kombination eines Gas- oder Diesel-betriebenen Motor-Kraftwerks mit einer Energiezwischenspeicherung über Flüssigluft-Technologie.

Mit dem vorgeschlagenen Konzept einer stationären Kraftanlage und dem vorgeschlagenen Verfahren zum Betreiben der Kraftanlage kann die Leistungsaufnahme bzw. Leistungsabgabe einer Kraftwerksanlage zeitnah den aktuellen Verhältnissen von Stromverbrauch und Stromerzeugung im öffentlichen Netz angepasst werden sowie durch maximale Spannweite zwischen Leistungsaufnahme und Leistungsabgabe zur Stabilisierung des Stromnetzes beigetragen werden, wobei durch effiziente Zwischenspeicherung von Energie eine Verschiebung eines Anteiles der elektrischen Leistung von Niedertarif- zu Hochtarifzeiten erfolgen kann.

Das vorgeschlagene Anlagenkonzept richtet sich insbesondere an die Stromerzeugungswirtschaft, mit besonderer Fokussierung auf Kraftwerkstechnologien zur. Erzeugung von elektrischem Strom mit maximaler Flexibilität und unter Einbeziehung von Kurz- und Mittelfristspeichern zum Ausgleich von asynchronen Erzeugungs- und Verbrauchsfluktuationen im öffentlichen Netz.

Der Fokus liegt dabei in einer möglichst wirtschaftlichen Verschaltung von Teilsystemen von unterschiedlichen Kraftwerkstechnologien. Im Wesentlichen handelt es sich dabei um eine Stromerzeugungsanlage auf Basis einer Motorenanlage (z.B. eine gas- oder dieselmotorisch betriebene Stromerzeugungsanlage), sowie um eine Stromerzeugungsanlage auf Basis der Entspannung von gespeicherter verflüssigter Luft.

Im Speziellen bezieht sich der Lösungsvorschlag auf stationäre Kraftanlagen zur Stromerzeugung
- in einem Nennleistungsbereich zwischen 5 und 50 MW,
- mit einer Energiespeichermöglichkeit für eine Speichernutzungsdauer von 2 bis 10 Betriebsslunden Volllastbetrieb.
- bei Einsatz von Hubkolben-Verbrennungsmotoren mit einem maßgeblichen Anteil an der Stromerzeugung der stationären Kraftanlage.

Die Motorenanlage einer vorgeschlagenen stationären Kraftanlage 1 kann dabei folgende Merkmale und Eckdaten aufweisen:
- Anzahl der Brennkraftmaschinen 2: 1 - 7 Verbrennungsmotoren
- Dreistufige Gemisch- bzw. Ladeluftkühlvorrichtung 22:
   - erste Kühlstufe 22a mit Warm- bzw. Heizwasser (z.B. Motorkühlwasser): Abkühlung der Ladeluft G von ca. 200 °C auf ca. 90 °C;
   - zweite Kühlstufe 22b mit Umgebungsluft: Abkühlung der Ladeluft G von ca. 90 °C auf ca. 50 °C;
   - dritte Kühlstufe 22c mit Kälte aus Cryogen-Speicheranlage: Abkühlung der Ladeluft G von ca. 50 °C auf 0 °C
- Leistung (pro Motor) im Nennlastbetrieb (Grundlast): ca. 5 - 50 MW
- Leistung (pro Motor) im Spitzenlastbetrieb: ca. 30 % Überlast (gegenüber Grundlast)
- Gesamt-Leistung der Motorenanlage im Grundlastbetrieb ca. 90 % der Summe der Leistungsabgabe der Entspannungsvorrichtung 13 (Expansionsturbinen für die Kaltluft K)
- Zuführung des Motorabgases zum Kaltluftwärmetauscher 12 während der Speicherentladungsphase der Flüssigluftspeichervorrichtung 9.
- Verwendung der Kaltluft K bzw. Arbeitsluft A nach Entspannung auf Umgebungsdruck und Abkühlung auf 0 - 10 °C als Verbrennungsluft V für die Motorenanlage.

Die Cryogen-Speicheranlage einer vorgeschlagenen stationären Kraftanlage 1 kann dabei folgende Eckdaten aufweisen:
- Leistungsgröße:
   Luftverflüssigungskapazität: 5 - 50 kg/sec
- Speicherkapazität:
   max. Dauer des Speicherbeladungsmodus: 5 - 20 h
   max. Dauer des Speicherentladungsmodus: 5 - 20 h
   Fassungsvermögen des/der Flüssigluftspeicher 25: 90 - 3600 t

Zusammenfassend weist das vorgeschlagene Anlagenkonzept einer stationären Kraftanlage 1 und das vorgeschlagene Verfahren zum Betreiben der stationären Kraftanlage 1 folgende Besonderheiten und/oder Vorteile auf:
- Mehrstufige Erwärmung der Kaltluft K.
- Ausnutzung des extrem tiefen Temperaturniveaus bei Verdampfung und erster Erwärmung der Kaltluft K als Wärmesenke für einen Dampfkreislauf zur energetischen Nutzung der Motorwärmen.
- Ausnutzung des tiefen Temperaturniveaus der Kaltluft K im Ladeluftwärmetauscher 21 zur weiteren Abkühlung der Ladeluft G (bzw. des Gas-Luft-Gemisches) der Brennkraftmaschine 2 in einer dritten Kühlstufe 22c des Intercoolers bzw. der Ladeluftkühlvorrichtung 22 auf ein Temperaturniveau von ca. 5°C.
- Erwärmung der Kaltluft K im Kaltluftwärmetauscher 12 vor der ersten Expansionsturbine 14 durch Nutzung der Abgaswärme der Brennkraftmaschine 2.
- Expansion der Arbeitsluft A in der ersten Expansionsturbine 14 von ca. 150 bar auf ca. 10 bar.
- Zwischenerwärmung der Arbeitsluft A im Arbeitsluftwärmetauscher 17 durch Nutzung der Kompressionswärme aus dem Luftverflüssigungsmodus der Flüssigluftspeichervorrichtung 9, wobei die Kompressionswärme über einen rekuperativen Wärmespeicher 31 zwischengespeichert wurde.
- Anwendung eines Wärmeübertragungskonzeptes mit zwei Wärmespeicherkreisläufen 35a, 35b zur Übertragung der Wärme aus der Kompressionsphase (1. Stufe) der zu verflüssigenden Luft L in den rekuperativen Wärmespeicher 31 (mittels Warmespeicherwärmetauscher 30) sowie von diesem zum Arbeitsluftwärmetauscher 17, wobei ein für den jeweiligen Temperaturbereich optimal geeignetes Wärmeübertragungsfluid eingesetzt wird, vorzugsweise ein Thermoöl für den niedrigeren sowie eine Salzschmelze für den höheren Temperaturbereich.
- Schaltung der Wärmespeicherkreisläufe 35a, 35b in einer Art und Weise, dass jeweils nur ein Kreislauf für das geringere Temperaturniveau (Thermoöl) und für das höhere Temperaturniveau (Salzschmelze) erforderlich ist, wobei die Wärmespeicherkreisläufe 35a, 35b zwischen Speicher-Beladungsbetrieb und Speicher-Entladungsbetrieb umgeschaltet werden können.
- Verwendung der Kaltluft K nach Verrichtung von Arbeit in der Entspannungsvorrichtung 13 als Verbrennungsluft V für die Brennkraftmaschine 2.
- Abkühlung der Verbrennungsluft V nach Austritt aus der zweiten Expansionsturbine 15 über einen Umgebungsluftwärmetauscher 19 auf ein Temperaturniveau von kleiner gleich etwa 50 °C.
- Weitere Abkühlung der Verbrennungsluft V nach Austritt aus dem Umgebungsluftwärmetauscher 19 auf ein Temperaturniveau von ca. 0 °C bis 10 °C in einem Verbrennungsluftwärmetauscher 20 unter Ausnutzung des tiefen Temperaturniveaus der Kaltluft K nach dem Verdampfer der Energieumwandlungsvorrichtung 3 und Zuführung der abgekühlten Verbrennungsluft V zur Brennkraftmaschine 2.

## Patentansprüche

1. Verfahren zum Betreiben einer stationären Kraftanlage (1) mit wenigstens einer Brennkraftmaschine (2), vorzugsweise einem Gasmotor, und einer Energieumwandlungsvorrichtung (3), wobei die Energieumwandlungsvorrichtung (3) nach einem organischen Kreisprozess nach Rankine betrieben wird, wobei der Energieumwandlungsvorrichtung (3) zur Verdampfung eines wenigstens zweiphasigen Arbeitsmediums (M) eine Abwärme der wenigstens einen Brennkraftmaschine (2) zugeführt wird, **dadurch gekennzeichnet, dass** der Energieumwandlungsvorrichtung (3) zur Kondensation des Arbeitsmediums (M), vorzugsweise verflüssigte, Kaltluft (K) einer Flüssigluftspeichervorrichtung (9) zugeführt wird.

2. Verfahren nach Anspruch 1, **dadurch gekennzeichnet, dass** die Verdampfung des Arbeitsmediums (M) in einem ersten Dampfprozesswärmetauscher (4) erfolgt, wobei dem ersten Dampfprozesswärmetauscher (4) eine Abwärme der wenigstens einen Brennkraftmaschine (2) mittels wenigstens eines Wärmekreislaufs (W) der wenigstens einen Brennkraftmaschine (2) zugeführt wird, wobei vorzugsweise dem ersten Dampfprozesswärmetauscher (4) die Abwärme aus einem Motorkühlwasserkreislauf und/oder aus einem Motorölkühlkreislauf und/oder aus einem Ladeluftkühlkreislauf zugeführt wird.

3. Verfahren nach Anspruch 1 oder 2, **dadurch gekennzeichnet, dass** die Kondensation des Arbeitsmediums (M) in einem zweiten Dampfprozesswärmetauscher (7) erfolgt, wobei dem zweiten Dampfprozesswärmetauscher (7), vorzugsweise flüssige, Kaltluft (K) zugeführt wird, wobei die Temperatur der Kaltluft (K) vorzugsweise höchstens etwa -120 °C, besonders bevorzugt höchstens etwa -160 °C, beträgt.

4. Verfahren nach einem der Ansprüche 1 bis 3, **dadurch gekennzeichnet, dass** die Kaltluft (K) während des Betriebs der wenigstens einen Brennkraftmaschine (2) zumindest zeitweise, vorzugsweise nur zeitweise, der Energieumwandlungsvorrichtung (3) zugeführt wird.

5. Verfahren nach Anspruch 4, **dadurch gekennzeichnet, dass** die Kaltluft (K) bei einer Leistungsanforderung der wenigstens einen Brennkraftmaschine (2) größer einer vorgebbaren Referenzleistung, vorzugsweise der Nennleistung (P_{N}) der Brennkraftmaschine (2), der Energieumwandlungsvorrichtung (3) zugeführt wird.

6. Verfahren nach einem der Ansprüche 1 bis 5, **dadurch gekennzeichnet, dass** eine Entspannungsvorrichtung (13) vorgesehen ist, der zur Erzeugung von mechanischer oder elektrischer Energie eine komprimierte Arbeitsluft (A) zugeführt wird, wobei der Entspannungsvorrichtung (13) als Arbeitsluft (A) die Kaltluft (K) zugeführt wird, wobei die Kaltluft (K) in einem Kaltluftwärmetauscher (12) erwärmt wird, vorzugsweise auf eine Temperatur von etwa 250 °C bis etwa 350 °C, besonders bevorzugt etwa 300 °C.

7. Verfahren nach Anspruch 6, **dadurch gekennzeichnet, dass** zur Erwärmung der Kaltluft (K) im Kaltluftwärmetauscher (12) eine Abgasabwärme der wenigstens einen Brennkraftmaschine (2) verwendet wird.

8. Verfahren nach Anspruch 6 oder 7, **dadurch gekennzeichnet, dass** die Kaltluft (K) vor ihrer Erwärmung im Kaltluftwärmetauscher (12) mittels eines Ladeluftwärmetauschers (21) zur Kühlung einer Ladeluft (G) der wenigstens einen Brennkraftmaschine (2) verwendet wird.

9. Stationäre Kraftanlage (1) mit wenigstens einer Brennkraftmaschine (2), vorzugsweise einem Gasmotor, und einer Energieumwandlungsvorrichtung (3), wobei die Energieumwandlungsvorrichtung (3) nach einem organischen Kreisprozess nach Rankine betreibbar ist, wobei der Energieumwandlungsvorrichtung (3) zur Verdampfung eines wenigstens zweiphasigen Arbeitsmediums (M) eine Abwärme der wenigstens einen Brennkraftmaschine (2) zuführbar ist, **dadurch gekennzeichnet, dass** der Energieumwandlungsvorrichtung (3) zur Kondensation des Arbeitsmediums (M), vorzugsweise verflüssigte, Kaltluft (K) einer Flüssigluftspeichervorrichtung (9) über eine Kaltluftleitung (8) zuführbar ist.

10. Stationäre Kraftanlage nach Anspruch 9, **dadurch gekennzeichnet, dass** die Energieumwandlungsvorrichtung (3) zur Verdampfung des Arbeitsmediums (M) einen ersten Dampfprozesswärmetauscher (4) umfasst, wobei dem ersten Dampfprozesswärmetauscher (4) eine Abwärme der wenigstens einen Brennkraftmaschine (2) mittels wenigstens eines Wärmekreislaufs (W) der wenigstens einen Brennkraftmaschine (2) zuführbar ist, wobei vorzugsweise dem ersten Dampfprozesswärmetauscher (4) die Abwärme aus einem Motorkühlwasserkreislauf und/oder aus einem Motorölkühlkreislauf und/oder aus einem Ladeluftkühlkreislauf zuführbar ist.

11. Stationäre Kraftanlage nach Anspruch 9 oder 10, **dadurch gekennzeichnet, dass** die Energieumwandlungsvorrichtung (3) zur Kondensation des Arbeitsmediums (M) einen zweiten Dampfprozesswärmetauscher (7) umfasst, wobei dem zweiten Dampfprozesswärmetauscher (7), vorzugsweise flüssige, Kaltluft (K) zuführbar ist, wobei die Kaltluft (K) vorzugsweise eine Temperatur von höchstens etwa -120 °C, besonders bevorzugt höchstens etwa -160 °C, aufweist.

12. Stationäre Kraftanlage nach einem der Ansprüche 9 bis 11, **dadurch gekennzeichnet, dass** eine Entspannungsvorrichtung (13) vorgesehen ist, der zur Erzeugung von mechanischer oder elektrischer Energie eine komprimierte Arbeitsluft (A) zuführbar ist, wobei die Kaltluft (K) nach dem Durchströmen der Energieumwandlungsvorrichtung (3) einem Kaltluftwärmetauscher (12) zuführbar ist, wobei die im Kaltluftwärmetauscher (12) erwärmte Kaltluft (K) über eine Arbeitsluftleitung (8') als Arbeitsluft (A) der Entspannungsvorrichtung (13) zuführbar ist.

13. Stationäre Kraftanlage nach Anspruch 12, **dadurch gekennzeichnet, dass** dem Kaltluftwärmetauscher (12) zur Erwärmung der Kaltluft (K) über eine Abgasleitung (16) ein Abgas der wenigstens einen Brennkraftmaschine (2) zuführbar ist.

14. Stationäre Kraftanlage nach Anspruch 12 oder 13, **dadurch gekennzeichnet, dass** dem Kaltluftwärmetauscher (12) ein Ladeluftwärmetauscher (21) vorgeschaltet ist, wobei im Ladeluftwärmetauscher (21) ein Kühlmedium eines Ladeluftkühlkreislaufs (24) durch die Kaltluft (K) kühlbar ist, wobei das gekühlte Kühlmedium über den Ladeluftkühlkreislauf (24) einer Ladeluftkühlvorrichtung (22) zum Abkühlen einer Ladeluft (G) der wenigstens einen Brennkraftmaschine (2) zuführbar ist.

15. Stationäre Kraftanlage nach einem der Ansprüche 9 bis 14, **dadurch gekennzeichnet, dass** die wenigstens eine Brennkraftmaschine (2) als, vorzugsweise fremdgezündeter, Hubkolbenmotor ausgebildet ist.
